# EUROPÄISCHE PATENTSCHRIFT

(11) **EP 2 861 882 B1**
(45) Veröffentlichungstag und Bekanntmachung des Hinweises auf die Patenterteilung: **27.11.2019**
(21) Anmeldenummer: 13726178.0
(22) Anmeldetag: 28.05.2013
(51) Int. Cl.: F16D 13/58, F16D 13/71, F16D 13/75

(54) **SELBSTNACHSTELLENDE REIBUNGSKUPPLUNG**
SELF-ADJUSTING FRICTION CLUTCH
EMBRAYAGE À FRICTION À RÉAJUSTEMENT AUTOMATIQUE

(30) Priorität: 14.06.2012 DE 102012209994
(43) Veröffentlichungstag der Anmeldung: 22.04.2015
(73) Patentinhaber: Schaeffler Technologies AG & Co. KG, 91074 Herzogenaurach (DE)
(72) Erfinder: DOLLANSKY, Johannes, 77830 Bühlertal (DE)
(86) Internationale Anmeldenummer: PCT/EP2013/060982
(87) Internationale Veröffentlichungsnummer: WO 2013/186043

(56) Entgegenhaltungen:
- EP-A2- 2 249 054
- DE-A1-102010 034 823
- DE-A1-102011 087 066
- FR-A1- 2 580 752

## Beschreibung

Die Erfindung betrifft eine Reibungskupplung gemäß dem Oberbegriff des Patentanspruchs 1. Insbesondere betrifft die Erfindung eine Reibungskupplung mit einer Gegendruckplatte und einem mit dieser verbundenen Deckel, einer mit dem Deckel mittels Blattfedern drehfest verbundenen und axial gegenüber der Gegendruckplatte axial entgegen der Wirkung der Blattfedern verlagerbaren Anpressplatte, einer die Anpressplatte an einem Betriebspunkt bei geschlossener Reibungskupplung mit einer Schließkraft gegen die Gegendruckplatte belastenden, sich am Deckel abstützenden und bei Betätigung der Reibungskupplung unter Aufhebung der Schließkraft an Tellerfederzungen axial entlang eines Ausrückwegs mit einer Ausrückkraft betätigten Tellerfeder, einer Kupplungsscheibe mit zwischen Gegendruckplatte und Anpressplatte verspannbaren, verschleißbehafteten Reibbelägen und einer den Verschleiß kompensierenden Nachstelleinrichtung mit einer zwischen Deckel und Tellerfeder angeordneten, abhängig von einer sich verschleißbedingt erhöhenden Ausrückkraft axial nachgebenden und einen auf der gegenüberliegenden Seite einen in Umfangsrichtung vorgespannten Verstellring eines zwischen Tellerfeder und Deckel angeordneten Rampensystems zur Kompensation eines verschleißbedingt nachzustellenden Anschlags der Tellerfeder freischaltenden Sensorfeder.

Gattungsgemäße Reibungskupplungen sind sogenannte kraftgesteuerte selbstnachstellende Reibungskupplungen. Dies bedeutet, dass mit zunehmendem Verschleiß die Ausrückkraft erhöht wird und abhängig von der Ausrückkraft bei einem vorgegebenen Schwellwert eine Nachstellung erfolgt. Derartige Reibungskupplungen sind seit Langem beispielsweise aus der DE 42 39 289 A1 bekannt. Die vorgesehene Tellerfeder spannt in nicht betätigtem Zustand die Anpressplatte gegen die Gegendruckplatte vor, so dass eine zwangsweise geschlossene (normally closed) Reibungskupplung unter Ausbildung eines Reibeingriffs der Reibbeläge der Kupplungsscheibe einerseits und Gegendruckplatte und Anpressplatte andererseits gebildet wird. Die Tellerfeder ist dabei zwischen Anpressplatte und Deckel vorgespannt und bildet dadurch einen die Schließkraft und die Ausrückkraft beeinflussenden Anstellwinkel am Betriebspunkt der Reibungskupplung im nicht betätigten Zustand aus. Die Ausrückkraft über den Ausrückweg ergibt sich dabei aus der zwischen den beiden Reibbelägen wirksamen Belagfederkraft, der die Anpressplatte im geöffneten Zustand von der Gegendruckplatte zur Einstellung eines Lüftspiels wirksamen Blattfederkraft und der Tellerfederkraft. Zur Einstellung des Betriebspunkts und des Anstellwinkels der Tellerfeder ist an dem Deckel ein Anschlag vorgesehen, der Teil der Nachstelleinrichtung ist und ein Rampensystem beinhaltet, welches aus einem in Umfangsrichtung beispielsweise durch Federn vorgespannten Verstellring mit in Umfangsrichtung angeordneten, ansteigenden Rampen und an dem Deckel vorgesehenen, zu den Rampen komplementären Gegenrampen gebildet ist. Desweiteren enthält die Nachstelleinrichtung eine Sensorfeder, die auf der anderen Seite der Tellerfeder zwischen der Tellerfeder und dem Deckel, beispielsweise an die Sensorfeder axial über- oder durchgreifender Anschlagnieten verspannt ist. Im Neuzustand oder neu nachgestellten Zustand befindet sich die Tellerfeder in dem vorgesehenen Anstellwinkel zum Deckel und die Ausrückkräfte sind so ausgelegt, dass sich die Sensorfeder im Wesentlichen starr verhält. Tritt Verschleiß an den Reibbelägen auf, verlagert sich die Anpressplatte im geschlossenen Zustand der Reibungskupplung in Richtung Gegendruckplatte und die Tellerfeder ändert ihren Anstellwinkel, deren Tellerfederzungen stellen sich auf. Infolge dieser Änderung der Hebelverhältnisse nimmt die Ausrückkraft laufend zu, so dass bei einer vorgegebenen Ausrückkraft die Sensorfeder sich elastisch verlagert, so dass die Tellerfeder den durch den Verstellring gebildeten Anschlag der Tellerfeder gegenüber dem Deckel verlässt oder zumindest die Vorspannung verringert, so dass sich dieser bis zum Erreichen einer erneuten die Verdrehung hemmenden Vorspannung durch die Tellerfeder verdrehen kann. Hierbei verlagert sich durch die Verdrehung des Verstellrings mittels seiner Rampen auf den Gegenrampen axial und stellt einen den Verschleiß kompensierenden, axial in Richtung der Gegendruckplatte verlagerten Anschlag gegenüber der Tellerfeder ein, der im Wesentlichen den ursprünglichen Anstellwinkel im Neuzustand der Reibungskupplung wieder herstellt.

Die typische Ausbildung der Kennlinie der Tellerfeder mit einem im Bereich des Betriebspunkts vorgesehen Ausrückkraftmaximum, einer bei zunehmendem Ausrückweg abfallenden und anschließend wieder ansteigenden Ausrückkraft birgt die Gefahr einer unerwünschten Nachstellung, wenn bei einstellbaren Ausrückwegen die Tellerfederkraft derart ansteigt, dass die Sensorfeder nachgibt. Um eine derartige unerwünschte Nachstellung zu verhindern, wird unter Berücksichtigung von vorzuhaltenden Sicherheitsfaktoren, die beispielsweise einem Setzen von Bauteilen und über die Lebensdauer sich ändernden Größe geschuldigt sind, die Kennlinie der Tellerfeder abhängig von den die Kraftgleichgewichte beeinflussenden Kräften, beispielsweise der Sensorfederkraft, der Belagfederkraft, der Blattfederkraft und dergleichen so ausgelegt, dass zwischen dem maximalen Ausrückweg und einem unerwünschten Nachstellen der Reibungskupplung ein vorgegebener Überweg eingestellt ist.

Ein Reibungskupplung, die auf den Oberbegriff des Patentanspruchs 1 lesbar ist, ist aus der DE 10 2010 034 823 A1 bekannt.

Aufgabe der Erfindung ist es, eine gattungsgemäße Reibungskupplung vorzuschlagen, die einen erhöhten Überweg und/oder ein verbessertes Ausrückkraftverhalten mit verbesserten Ausrückkraftminima aufweist.

Die Aufgabe wird durch eine Reibungskupplung mit den Merkmalen des Anspruchs 1 gelöst. Die Unteransprüche geben dabei vorteilhafte Ausführungsformen wieder.

Es wird gemäß dem erfinderischen Gedanken eine Reibungskupplung mit einer Gegendruckplatte und einem mit dieser verbundenen Deckel, einer mit dem Deckel mittels Blattfedern drehfest verbundenen und axial gegenüber der Gegendruckplatte axial entgegen der Wirkung der Blattfedern verlagerbaren Anpressplatte, einer die Anpressplatte an einem Betriebspunkt bei geschlossener Reibungskupplung mit einer Schließkraft gegen die Gegendruckplatte belastenden, sich am Deckel abstützenden und bei Betätigung der Reibungskupplung unter Aufhebung der Schließkraft an Tellerfederzungen axial entlang eines Ausrückwegs mit einer Ausrückkraft betätigten Tellerfeder, einer Kupplungsscheibe mit zwischen Gegendruckplatte und Anpressplatte verspannbaren, verschleißbehafteten Reibbelägen und einer den Verschleiß kompensierenden Nachstelleinrichtung mit einer zwischen Deckel und Tellerfeder angeordneten, abhängig von einer sich verschleißbedingt erhöhenden Ausrückkraft axial nachgebenden und einen auf der gegenüberliegenden Seite einen in Umfangsrichtung vorgespannten Verstellring eines zwischen Tellerfeder und Deckel angeordneten Rampensystems zur Kompensation eines verschleißbedingt nachzustellenden Anschlags der Tellerfeder freischaltenden Sensorfeder vorgeschlagen, bei der eine gegenüber der Tellerfeder wirksame Sensorfederkraft der Sensorfeder über den Ausrückweg ansteigend vorgesehen ist. Durch eine über den Ausrückweg ansteigende Kennlinie der Sensorfeder kann der Schnittpunkt zwischen Ausrückkraft und der Sensorfederkraft gegenüber Sensorfedern mit waagrechter Kennlinie mit ausreichendem Sicherheitszuschlag in einen Ausrückwegbereich gelegt werden, der größer als der maximale Ausrückweg ist, ohne die Tellerfederkennlinie und die Belagfederkennlinie, die Blattfederkennlinie und die Hebelverhältnisse zu ändern. Auf diese Weise wird bei ansonsten gleichbleibenden Auslegungen der Reibungskupplung ein Überweg gegenüber dem Schnittpunkt, der eine unerwünschte, nicht im Bereich des Betriebspunkts liegende Nachstellung markiert, erzielt. Auf diese Weise kann bei herkömmlich ausgelegten Reibungskupplungen ein Sicherheitsgewinn erzielt werden.

Die über den Ausrückweg ansteigende Kennlinie der Sensorfeder kann in vorteilhafter Weise mittels einer Sensorfeder mit einer üblichen Sensorfederkennlinie beispielsweise mit Tellerfedercharakteristik erzielt werden, indem über den Ausrückweg eine sich verkürzende Hebellänge der Sensorfeder zwischen Tellerfeder und Deckel vorgesehen ist. Es hat sich hierbei als vorteilhaft erwiesen, die Einstellung der Hebellänge bezogen auf einen Hebelpunkt im Bereich eines Kraftrands der Sensorfeder durch Änderungen der Auflageflächen der Sensorfeder gegenüber der Tellerfeder und/oder dem Deckel vorzunehmen. Hierzu wird zumindest eine dieser Anlageflächen ballig ausgebildet, so dass bei einer Relativverlagerung der Tellerfeder gegenüber der Sensorfeder aufgrund unterschiedlicher Einspannradien dieser die Sensorfeder mittels des entsprechenden Ballus auf der Tellerfeder und/oder dem Deckel unter Änderung des Wirkdurchmessers und damit der Änderung der Hebelgeometrie der Sensorfeder gegenüber der Tellerfeder abwälzt. Hierbei wird die Hebeländerung über den Ausrückweg durch einen Ballus zwischen Sensorfeder und Tellerfeder bevorzugt. Ein Ballus zwischen Sensorfeder und Deckel kann unterstützend und in Sonderfällen ausschließlich der Hebeländerung der Sensorfeder über den Ausrückweg vorgesehen sein.

Der Ballus einer oder beider Anlageflächen kann in einer bevorzugten Ausführungsform kreisrund sein und zumindest einen Radius größer gleich 10 mm, bevorzugt größer gleich 20 mm aufweisen. Alternativ können die Anlageflächen elliptisch, parabolisch, in Freiform oder in ähnlicher Weise ausgebildet sein.

In einem eingestellten Kräftegleichgewicht der Reibungskupplung kann eine aus einer zwischen den Reibbelägen wirksamen Belagfederkraft, einer entgegen der Schließkraft wirksamen Blattfederkraft der Blattfedern und der Sensorfederkraft gebildete Summensensorkraft in Richtung eines maximalen Ausrückwegs eine im Wesentlichen waagrechte oder ansteigende Asymptote aufweisen, die durch die vorgeschlagene Sensorfeder in besonders vorteilhafter Weise dargestellt werden kann. Es hat sich als vorteilhaft erwiesen, wenn eine mittlere Steigung der Sensorfederkraft über den Ausrückweg größer gleich fünf Prozent beträgt.

Die Erfindung wird anhand der in den Figuren 1 bis 9 dargestellten Ausführungsbeispiele näher erläutert. Dabei zeigen:
- Figur 1: einen Halbschnitt durch eine Reibungskupplung mit einer Sensorfeder mit über den Ausrückweg ansteigenden Sensorkraft,
- Figur 2: ein Detail der Reibungskupplung der Fig. 1,
- Figur 3: den Sensorring der Figur 1 in Ansicht,
- Figuren 4 bis 7: einen Teilschnitt durch eine gegenüber der Reibungskupplung der Figur 1 leicht abgeänderten Reibungskupplung in verschiedenen Betriebszuständen,
- Figur 8: ein Diagramm zur Darstellung des Kräftegleichgewichts einer konventionellen Reibungskupplung und der vorgeschlagenen Reibungskupplung
und
- Figur 9: ein Vergleich der Sensorkennlinien einer bei über den Ausrückweg mit gleichbleibenden und variierenden Hebelverhältnissen eingespannten Sensorfeder.

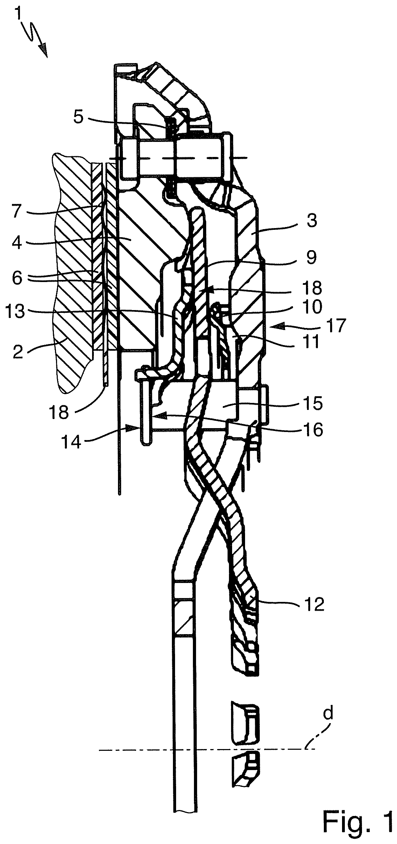

Figur 1 zeigt die obere Hälfte der um die Drehachse d verdrehbar angeordneten Reibungskupplung 1 im Schnitt mit der nur angedeutet dargestellten Gegendruckplatte 2 und dem mit diesem fest verbundenen Deckel 3, mit dem die Anpressplatte 4 mittels der Blattfedern 5 axial verlagerbar und drehfest verbunden ist. Zwischen Gegendruckplatte 2 und Anpressplatte 4 sind die Reibbeläge 6 mit der zwischen diesen wirksamen Belagfederung 7 der nur teilweise dargestellten Kupplungsscheibe 8 angeordnet. Die Anpressplatte 4 ist mittels der Tellerfeder 9 gegen die Gegendruckplatte 2 vorgespannt. Hierzu stützt sich diese an dem Verstellring 10 des Rampensystems 11 an dem Deckel 3 ab.

Im nicht betätigten Zustand ist die Reibungskupplung 1 mit der vorgegebenen Schließkraft geschlossen, die sich aus der Vorspannung der Tellerfeder, der gegen diese wirksamen Belagfederung 7 und der ebenfalls entgegen der Vorspannung der Tellerfeder 9 wirksamen Blattfederkraft zusammensetzt. Die Reibungskupplung 1 wird betätigt, indem mittels eines nicht dargestellten Ausrücksystems die Tellerfederzungen 12 axial entlang der Drehachse d in Richtung Gegendruckplatte 2 verlagert werden. Hierbei stützt sich die Tellerfeder 9 an der Sensorfeder 13 axial ab. Die Sensorfeder 13 ist zwischen dem Deckel 3 und der Tellerfeder 9 auf der dem Verstellring 10 gegenüberliegenden Seite ab. Zur Bildung eines in die entgegengesetzte Richtung des Verstellrings 10 wirksamen Gegenlagers 14, an dem sich die Sensorfeder 13 abstützen kann, sind in dem Deckel 3 axial die Tellerfeder 9 durchgreifende Nietbolzen 15 vorgesehen, die endseitig entsprechende Abstützflächen 16 aufweisen. Durch die Entlastung der Vorspannung der Tellerfeder 9 wird die Anpressplatte 4 von den Blattfedern 5 von der Gegendruckplatte 2 wegbewegt und der Reibschluss zwischen Reibbelägen 6 und der Gegendruckplatte 2 und der Anpressplatte 4 sukzessive aufgehoben. Bei im Neuzustand vorhandenem Kräftegleichgewicht verhält sich die Sensorfeder 13 infolge entsprechender Auslegung im Wesentlichen starr.

Die Reibbeläge 6 sind mit zunehmender Betriebsdauer der Reibungskupplung 1 Verschleiß unterworfen, was dazu führt, dass im geschlossenen Zustand der Reibungskupplung 1 die Anpressplatte 4 in Richtung Gegendruckplatte 2 wandert und demzufolge die Tellerfeder 9 ihren Anstellwinkel gegenüber der Anpressplatte 4 unter Aufstellung der Tellerfederzungen 12 ändert. Durch die geänderten Hebelverhältnisse steigt dabei die an den Tellerfederzungen 12 notwendige Ausrückkraft, um die Reibungskupplung 1 vom Betriebspunkt in geschlossenem Zustand zu öffnen. Um diese Ausrückkraft über Lebensdauer der Reibungskupplung 1 in einem akzeptablen Rahmen zu halten, ist die kraftgesteuerte, selbstnachstellende Nachstelleinrichtung 17 vorgesehen. Hierzu gibt die Sensorfeder 13 bei einem nachzustellenden Verschleiß axial nach, so dass die Tellerfeder 9 bei einem Ausrückvorgang den Verstellring 10 entlastet. Der Verstellring 10 ist mittels einer nicht dargestellten Federeinrichtung in Umfangsrichtung vorgespannt und weist an der der Hebelfläche gegenüberliegenden Stirnseite über den Umfang verteilte, ansteigende Rampen auf, die mit an dem Deckel 3 vorgesehenen wie eingeprägten oder eingelegten zu diesen komplementären Gegenrampen das Rampensystem 11 bilden. Bei unter Entspannung um einen vorgegebenen Betrag bis zu einer erneuten Hemmung durch die Tellerfeder 9 verdrehtem Verstellring 10 verlagert sich die Hebelfläche des Verstellrings in Richtung Druckplatte, so dass der Verschleiß der Reibbeläge 6 ausgeglichen und die Tellerfeder 9 bei geschlossener Reibungskupplung 1 im Wesentlichen wieder den Anstellwinkel im Neuzustand einnimmt.

Aufgrund der typischen Kraftkennlinie der Tellerfeder 9, bei der am Betriebspunkt bei geschlossener Reibungskupplung 1 die Schließkraft und hebelbereinigt die Ausrückkraft groß, bevorzugt maximal ist und bei größeren Ausrückwegen zuerst abfällt und dann wieder ansteigt, muss ein ungewollter, nicht verschleißbedingter Nachstellvorgang bei großen Ausrückwegen, bei dem die Anpresskraft erneut so groß wie die Sensorkraft der Sensorfeder 13 wird und diese daher erneut infolge der hohen Ausrückkraft nachgibt und den Verstellring 10 durch Mitverlagerung der Tellerfeder 9 entlastet, vermieden werden. Erfindungsgemäß wird hierzu die Sensorfeder 13 so ausgelegt, dass deren Sensorkraft über den Ausrückweg so ansteigt, dass ein Schnittpunkt zwischen Ausrückkraft und Sensorkraft außerhalb des maximalen Ausrückwegs erfolgt. Hierzu wird die Sensorfeder 13 derart ausgelegt, dass mit zunehmendem Ausrückweg der Hebel zwischen einem Drehpunkt der Sensorfeder 13 verringert wird. Dies wird erzielt, indem die Anlagefläche 18 der Sensorfeder 13 gegenüber der Tellerfeder 9 ballig ausgebildet ist.

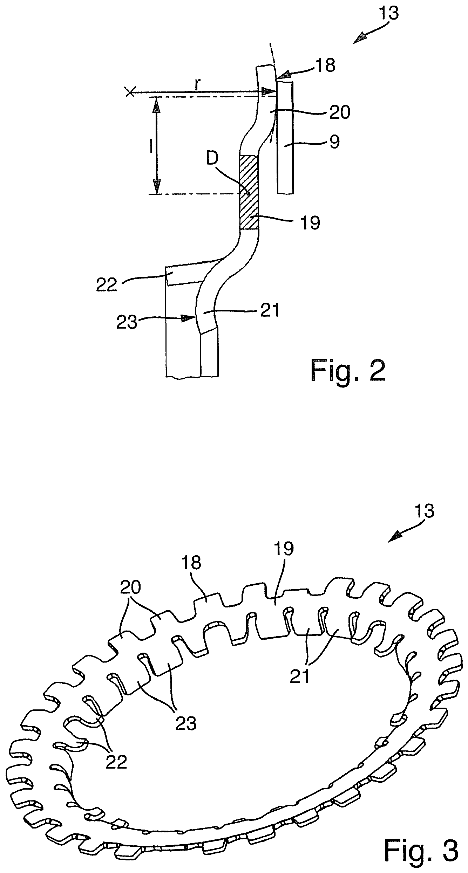

Die Figuren 2 und 3 zeigen die Sensorfeder 13 der Figur 1 im Detail und in 3D-Ansicht. Um den umlaufenden Kraftrand 19 sind nach radial innen und radial außen erweiterte und über den Umfang verteilte Ansätze 20, 21, 22 vorgesehen. Die nach radial außen erweiterten Ansätze 20 weisen die ballige Anlagefläche 18 auf, die in dem gezeigten Ausführungsbeispiel den Radius r größer gleich 20 mm aufweisen. Die radial nach innen erweiterten Ansätze 21 stellen Fliehkraftgewichte der Sensorfeder 13 dar, die verhindern dass die Sensorfederkraft unter Drehzahl absinkt. Die Ansätze 22 gabeln die Nietbolzen 15 radial ein und bilden eine Verdrehsicherung für die Sensorfeder 13 gegenüber dem Deckel 3 (Figur 1). Bei einer Betätigung der Reibungskupplung 1 (Figur 1) wälzt die Tellerfeder 9 auf der balligen Anlagefläche 18 der Sensorfeder 13 ab, wodurch sich mit zunehmendem Ausrückweg der Hebel I zwischen der Berührfläche von Tellerfeder 9 und Sensorfeder 13 und dem Drehpunkt D der Sensorfeder 13 in dem Kraftrand verkürzt, so dass die effektiv wirksame Steifigkeit der Sensorfeder zunimmt.

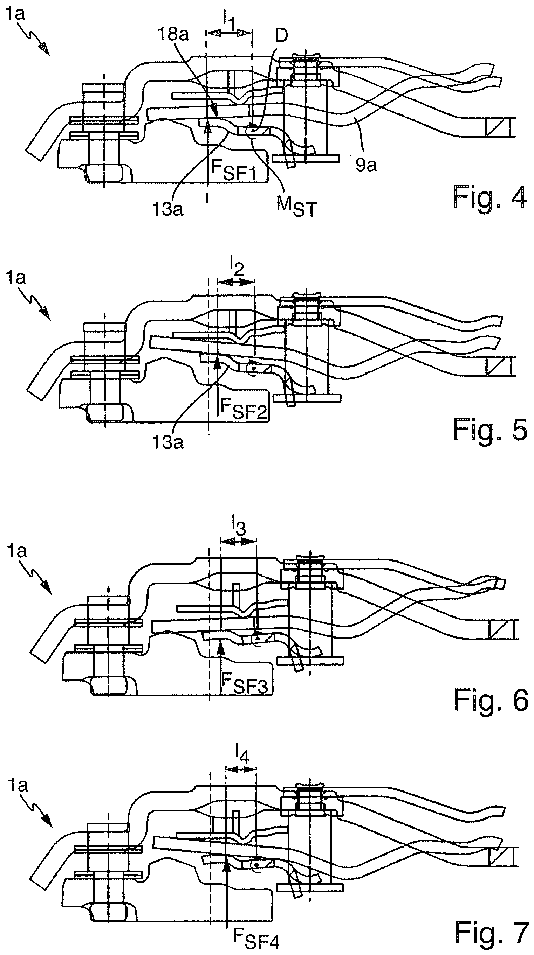

Aus den Figuren 4 bis 7 wird dieser Zusammenhang anhand der gegenüber der Reibungskupplung 1 leicht, jedoch nicht erfindungswesentlich veränderten, im Schnitt dargestellten Reibungskupplung 1a deutlich, bei der lediglich die Kupplungsdruckplatte ohne Gegendruckplatte und Kupplungsscheibe dargestellt ist.

In Figur 4 ist die geschlossene Reibungskupplung 1a im Neuzustand dargestellt. Hierbei stellt sich zwischen der Tellerfeder 9a und der Sensorfeder 13a an der ballig ausgebildeten Anlagefläche 18a der Hebel I₁ zwischen dem Drehpunkt D ein, der bei dem vorgegebenen Drehmoment M_{SF} die auf die Tellerfeder 9a wirksame Sensorfederkraft F_{SF1} aufbringt. Bei dem in Figur 5 gezeigten Neuzustand der geöffneten Reibungskupplung 1a nimmt die Länge des Hebels I₂ ab, so dass die Sensorfederkraft F_{SF2} zunimmt. Bei Erreichen des maximalen Ausrückwegs ist daher ausreichender Überweg für den Schnittpunkt der Ausrückkraft und der Sensorfederkraft F_{SF2} vorhanden, um ein hier unerwünschtes Nachstellen zu verringern. Durch die ansteigende Kennlinie der Sensorfeder 13a kann gleichzeitig die der Schließkraft der Tellerfeder 9a entgegenwirkende und daher diese vermindernde Sensorfederkraft F_{SF1} am Betriebspunkt bei geschlossener Reibungskupplung 1a minimal ausgelegt sein.

In Figur 6 wird die Reibungskupplung 1a mit Nachstellbedarf im geschlossen Zustand und in Figur 7 in geöffneten Zustand gezeigt. Hierbei verringern sich die Hebel I₃, I₄ zusätzlich, so dass erhöhte Sensorfederkräfte F_{SF3}, F_{SF4} anliegen.

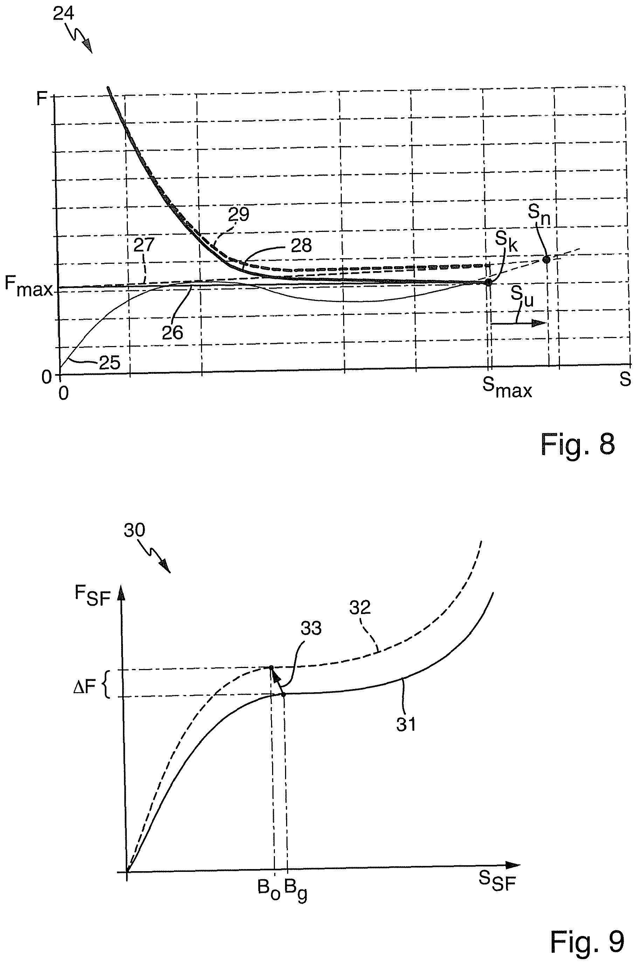

Das Diagramm 24 der Figur 8 zeigt den Kräftezusammenhang der Reibungskupplungen 1, 1a im Vergleich mit einer konventionellen Reibungskupplung mit nicht balliger Ausbildung der Anlagefläche der Sensorfeder an der Tellerfeder. Hierbei sind die Kraftkennlinien der Kräfte F über den Ausrückweg s der Reibungskupplungen 1, 1a jeweils als gepunktete Linien und die der konventionellen Reibungskupplung als durchgezogene Linien dargestellt. Der Auslegung der Reibungskupplungen liegt die Ausrückkraftkennlinie 25 - hier im Neuzustand der Reibungskupplung - mit dem von der Tellerfederkennlinie der Tellerfeder abhängigen Verlauf mit einem im Bereich des Betriebspunktes bei geschlossener Reibungskupplung vorgesehenen Maximum und wieder ansteigenden Verlauf im Bereich des maximalen Ausrückwegs sₘₐₓ zugrunde. Um einen Nachstellvorgang am Betriebspunkt zu vermeiden, ist die Sensorfederkraftkennlinie 26 der konventionellen Reibungskupplung so ausgelegt, dass diese am Kraftmaximum Fₘₐₓ im Wesentlichen steif ausgebildet ist, die Sensorfederkraft also im Wesentlichen der Ausrückkraft entspricht. Aufgrund der nicht balligen Ausführung der Sensorfeder verläuft deren Kennlinie im Wesentlichen linear und schneidet die Ausrückkraftkennlinie unmittelbar hinter dem maximalen Ausrückweg sₘₐₓ am Schnittpunkt Sₖ.

Die Sensorfederkraftkennlinie 27 erlaubt durch deren über den Ausrückweg s ansteigende Form, die durch die Ausbildung der Reibungskupplung 1, 1a der Figuren 1 bis 7 erzielt wird, einen um den Überweg sᵤ von dem maximalen Ausrückweg sₘₐₓ verlagerten Schnittpunkt Sₙ. Durch den gewonnenen Überweg sᵤ kann die Auslegung der Reibungskupplungen 1, 1a mit größerer Sicherheit gegen eine Nachstellung am Schnittpunkt Sₙ. Der Vollständigkeit halber sei erwähnt, dass die effektiven Sensorfederkräfte von der Belagfederung und der Blattfederkraft abhängen. Die sich daraus ergebenden Summenkräfte sind in den Kennlinien 28, 29 dargestellt. Die Kennlinie 29 der Sensorfeder 13, 13a ergibt sich hierbei als im Wesentlichen waagrechte oder ansteigende Asymptote in Richtung maximalem Ausrückweg sₘₐₓ, während die Kennlinie 28 abfällt und daher zu dem frühen Schnittpunkt Sₖ der Sensorfederkraft mit der Ausrückkraft führt.

Die Figur 9 zeigt in dem Diagramm 30 die Kraftkennlinien 31, 32 der Sensorfederkräfte F_{SF} der Sensorfeder 13, 13a der Figuren 1 und 4 über den Sensorfederweg s_{SF}. Die Kraftkennlinie 31 zeigt ein Verhalten der Sensorkraft F_{SF} ohne den Einfluss einer Hebelverkürzung, die Kraftkennlinie 32 das Verhalten bei maximal verkürztem Hebel. Die tatsächliche Kraftzunahme der Sensorfeder 13, 13a durch Verkürzen des Hebels während der Betätigung der Reibungskupplung 1, 1a von einem Betriebspunkt B_{g} in einem geschlossenen Zustand der Reibungskupplung zu einem Betriebspunkt Bₒ in einem geöffneten Zustand der Kupplung ergibt sich durch die Kraftdifferenz ΔF entlang des Pfeils 33.

### Bezugszeichenliste

- 1: Reibungskupplung
- 1a: Reibungskupplung
- 2: Gegendruckplatte
- 3: Deckel
- 4: Anpressplatte
- 5: Blattfeder
- 6: Reibbelag
- 7: Belagfederung
- 8: Kupplungsscheibe
- 9: Tellerfeder
- 9a: Tellerfeder
- 10: Verstellring
- 11: Rampensystem
- 12: Tellerfederzunge
- 13: Sensorfeder
- 13a: Sensorfeder
- 14: Gegenlager
- 15: Nietbolzen
- 16: Abstützfläche
- 17: Nachstelleinrichtung
- 18: Anlagefläche
- 18a: Anlagefläche
- 19: Kraftrand
- 20: Ansatz
- 21: Ansatz
- 22: Ansatz
- 23: Anlagefläche
- 24: Diagramm
- 25: Ausrückkraftkennlinie
- 26: Sensorfederkraftkennlinie
- 27: Sensorfederkraftkennlinie
- 28: Kennlinie
- 29: Kennlinie
- 30: Diagramm
- 31: Kraftkennlinie
- 32: Kraftkennlinie
- 33: Pfeil
- Bₒ: Betriebspunkt
- B_{g}: Betriebspunkt
- D: Drehpunkt
- d: Drehachse
- F: Kraft
- Fₘₐₓ: Kraftmaximum
- F_{SF}: Sensorfederkraft
- F_{SF1}: Sensorfederkraft
- F_{SF2}: Sensorfederkraft
- F_{SF3}: Sensorfederkraft
- F_{SF4}: Sensorfederkraft
- ΔF: Kraftdifferenz
- I: Hebel
- I₁: Hebel
- I₂: Hebel
- I₃: Hebel
- I₄: Hebel
- M_{SF}: Drehmoment
- r: Radius
- S: Schnittpunkt
- Sₖ: Schnittpunkt
- Sₙ: Schnittpunkt
- s: Ausrückweg
- sₘₐₓ: maximaler Ausrückweg
- sᵤ: Überweg
- s_{SF}: Sensorfederweg

## Patentansprüche

1. Reibungskupplung (1, 1a) mit einer Gegendruckplatte (2) und einem mit dieser verbundenen Deckel (3), einer mit dem Deckel (3) mittels Blattfedern (5) drehfest verbundenen und axial gegenüber der Gegendruckplatte (2) axial entgegen der Wirkung der Blattfedern (5) verlagerbaren Anpressplatte (4), einer die Anpressplatte (4) an einem Betriebspunkt (B_{g}) bei geschlossener Reibungskupplung (1, 1a) mit einer Schließkraft gegen die Gegendruckplatte (2) belastenden, sich am Deckel (3) abstützenden und bei Betätigung der Reibungskupplung (1, 1a) unter Aufhebung der Schließkraft an Tellerfederzungen (12) axial entlang eines Ausrückwegs (s) mit einer Ausrückkraft betätigten Tellerfeder (9, 9a), einer Kupplungsscheibe (8) mit zwischen Gegendruckplatte (2) und Anpressplatte (4) verspannbaren, verschleißbehafteten Reibbelägen (6) und einer den Verschleiß kompensierenden Nachstelleinrichtung (17) mit einer zwischen Deckel (3) und Tellerfeder (9, 9a) angeordneten, abhängig von einer sich verschleißbedingt erhöhenden Ausrückkraft axial nachgebenden und einen auf der gegenüberliegenden Seite einen in Umfangsrichtung vorgespannten Verstellring (10) eines zwischen Tellerfeder (9, 9a) und Deckel (3) angeordneten Rampensystems (11) zur Kompensation eines verschleißbedingt nachzustellenden Anschlags der Tellerfeder (9, 9a) freischaltenden Sensorfeder (13, 13a), die in ihrem Kraftrand einen Drehpunkt (D) aufweist und ein Hebel (I) zwischen einer Berührfläche von Tellerfeder (9) und Sensorfeder (13, 13a) und dem Drehpunkt (D) definiert ist, wobei eine gegenüber der Tellerfeder (9, 9a) wirksame Sensorfederkraft (F_{SF}) der Sensorfeder (13, 13a) über den Ausrückweg (s) ansteigend vorgesehen ist, **dadurch gekennzeichnet, dass** eine Anlagefläche (18, 18a) der Sensorfeder (13, 13a) an der Tellerfeder (9, 9a) derart ballig ausgebildet ist, dass sich der Hebel (I) bei Nachstellbedarf der Reibungskupplung (1, 1a) verringert und die Berührfläche sich in radialer Richtung der Reibungskupplung (1, 1a) nach innen verlagert.

2. Reibungskupplung (1, 1a) nach Anspruch 1, **dadurch gekennzeichnet, dass** über den Ausrückweg (s) ein sich verkürzender Hebel (I) der Sensorfeder (13, 13a) zwischen Tellerfeder (9, 9a) und Deckel (3) vorgesehen ist.

3. Reibungskupplung (1, 1a) nach Anspruch 1 oder 2, **dadurch gekennzeichnet, dass** eine Anlagefläche (23) der Sensorfeder (13, 13a) an dem Deckel (3) ballig ausgebildet ist.

4. Reibungskupplung (1, 1a) nach einem der Ansprüche 2 oder 3, **dadurch gekennzeichnet, dass** zumindest eine der Anlageflächen (18, 18a, 23) einen Radius (r) größer gleich 10 mm, bevorzugt größer gleich 20 mm aufweist.

5. Reibungskupplung (1, 1a) nach einem der Ansprüche 1 bis 4, **dadurch gekennzeichnet, dass** eine aus einer zwischen den Reibbelägen (6) wirksamen Belagfederkraft, einer entgegen der Schließkraft wirksamen Blattfederkraft der Blattfedern (5) und der Sensorfederkraft (F_{SF}) gebildete Summensensorkraft in Richtung eines maximalen Ausrückwegs (sₘₐₓ) eine im Wesentlichen waagrechte oder ansteigende Asymptote aufweist.

6. Reibungskupplung (1, 1a) nach einem der Ansprüche 1 bis 5, **dadurch gekennzeichnet, dass** eine mittlere Steigung der Sensorfederkraft (F_{SF}) über den Ausrückweg (s) größer gleich fünf Prozent beträgt.

## Claims

1. Friction clutch (1, 1a) having a counterpressure plate (2) and a cover (3) which is connected to the latter; a pressing plate (4) which is connected fixedly to the cover (3) by means of leaf springs (5) so as to rotate with it and can be moved axially with respect to the counterpressure plate (2) counter to the action of the leaf springs (5); a cup spring (9, 9a) which loads the pressing plate (4) at an operating point (B_{g}) in the case of a closed friction clutch (1, 1a) with a closing force against the counterpressure plate (2), is supported on the cover (3) and, in the case of actuation of the friction clutch (1, 1a) with cancellation of the closing force, is actuated by way of the disengaging force on cup spring tongues (12) axially along the disengagement travel (s); a clutch disc (8) with friction linings (6) which are subject to wear and can be braced between the counterpressure plate (2) and the pressing plate (4), and an adjusting device (17) which compensates for the wear with a sensor spring (13, 13a) which is arranged between the cover (3) and the cup spring (9, 9a), yields axially in a manner which is dependent on a disengaging force which increases in a wear-induced manner, and releases an adjusting ring (10) of a ramp system (11) which is arranged between the cup spring (9, 9a) and the cover (3), which adjusting ring (10) is prestressed in the circumferential direction on the opposite side, for the compensation of a stop of the cup spring (9, 9a), which stop is to be adjusted in a wear-induced manner, which sensor spring (13, 13a) has a pivot point (D) in its force edge, and a lever (I) is defined between a contact area of the cup spring (9) and the sensor spring (13, 13a) and the pivot point (D), a sensor spring force (F_{SF}) of the sensor spring (13, 13a), which sensor spring force (F_{SF}) is active with respect to the cup spring (9, 9a), being provided so as to rise over the disengagement travel (s), **characterized in that** a bearing face (18, 18a) of the sensor spring (13, 13a) on the cup spring (9, 9a) is of crowned configuration such that the lever (I) is reduced in size in the case of an adjustment requirement of the friction clutch (1, 1a), and the contact area moves towards the inside in the radial direction of the friction clutch (1, 1a).

2. Friction clutch (1, 1a) according to Claim 1, **characterized in that** a shortening lever (I) of the sensor spring (13, 13a) is provided between the cup spring (9, 9a) and the cover (3) over the disengagement travel (s).

3. Friction clutch (1, 1a) according to Claim 1 or 2, **characterized in that** a bearing face (23) of the sensor spring (13, 13a) on the cover (3) is of crowned configuration.

4. Friction clutch (1, 1a) according to either of Claims 2 and 3, **characterized in that** at least one of the bearing faces (18, 18a, 23) has a radius (r) of greater than or equal to 10 mm, preferably of greater than or equal to 20 mm.

5. Friction clutch (1, 1a) according to one of Claims 1 to 4, **characterized in that** an overall sensor force which is formed from a lining spring force which is active between the brake linings (6), a leaf spring force of the leaf springs (5) which is active counter to the closing force, and the sensor spring force (F_{SF}) has a substantially horizontal or rising asymptote in the direction of a maximum disengagement travel (sₘₐₓ).

6. Friction clutch (1, 1a) according to one of Claims 1 to 5, **characterized in that** a mean gradient of the sensor spring force (F_{SF}) over the disengagement travel (s) is greater than or equal to 5%.

## Revendications

1. Embrayage à friction (1, 1a) comprenant une plaque de contre-pression (2) et un capot (3) relié à celle-ci, une plaque de pression (4) reliée solidairement en rotation au capot (3) au moyen de ressorts à lame (5) et déplaçable axialement par rapport à 1a plaque de contre-pression (2) et axialement à l'opposé de l'action des ressorts à lame (5), une rondelle-ressort (9a, 9b) qui contraint la plaque de pression (4) en un point de fonctionnement (B_{g}), lorsque l'embrayage à friction (1, 1a) est fermé, contre la plaque de contre-pression (2) avec une force de fermeture, qui vient en appui sur le capot (3) et qui est actionnée avec une force de désembrayage axialement le long d'un chemin de désembrayage (s) sur des languettes de rondelle-ressort (12) lors de l'actionnement de l'embrayage à friction (1, 1a) par suppression de la force de fermeture, un disque d'embrayage (8) qui comprend des garnitures de friction (6) pouvant être usées et serrées entre la plaque de contre-pression (2) et la plaque de pression (4) et un dispositif de réglage (17) compensant l'usure et comprenant un ressort de capteur (13, 13a) qui est disposé entre le capot (3) et la rondelle-ressort (9, 9a), qui est élastique axialement en fonction d'une force de désembrayage augmentant en raison de l'usure, et qui libère sur le côté opposé une bague de réglage (10), précontrainte dans la direction périphérique, d'un système de rampes (11) disposé entre la rondelle-ressort (9, 9a) et le capot (3) pour compenser une butée, à régler en fonction de l'usure, de la rondelle-ressort (9, 9a), laquelle rondelle-ressort comporte un point de rotation (D) dans son bord d'effort, un levier (I) étant défini entre une surface de contact de la rondelle-ressort (9) et le ressort de capteur (13, 13a) et le point de rotation (D), une force (F_{SF}) du ressort de capteur (13, 13a), laquelle agit par rapport à la rondelle-ressort (9, 9a), étant prévue de manière croissante sur le chemin de désembrayage (s), **caractérisé en ce qu'**une surface d'appui (18, 18a) du ressort de capteur (13, 13a) est formée de manière convexe sur la rondelle-ressort (9, 9a) de façon à ce que le levier (I) diminue lorsque l'embrayage à friction (1, 1a) nécessite un réglage et déplace la surface de contact vers l'intérieur dans une direction radiale de l'embrayage à friction (1, 1a).

2. Embrayage à friction (1, 1a) selon la revendication 1, **caractérisé en ce qu'**un levier (I), qui se raccourcit, du ressort de capteur (13, 13a) est prévu sur le chemin de désembrayage (s) entre la rondelle-ressort (9, 9a) et le capot (3).

3. Embrayage à friction (1, 1a) selon la revendication 1 ou 2, **caractérisé en ce qu'**une surface d'appui (23) du ressort de capteur (13, 13a) est formée de manière convexe sur le capot (3).

4. Embrayage à friction (1, 1a) selon l'une des revendications 2 et 3, **caractérisé en ce que** l'une au moins des surfaces d'appui (18, 18a, 23) a un rayon (r) supérieur ou égal à 10 mm, de préférence supérieur ou égal à 20 mm.

5. Embrayage à friction (1, 1a) selon l'une des revendications 1 à 4, **caractérisé en ce qu'**une force de capteur totale, formée d'une force de ressort de garniture agissant entre les garnitures de friction (6), d'une force des ressorts à lame (5) agissant à l'opposé de la force de fermeture, et de la force de capteur (F_{SF}), présente dans la direction d'un chemin de désembrayage maximal (sₘₐₓ) une asymptote sensiblement horizontale ou ascendante.

6. Embrayage à friction (1, 1a) selon l'une des revendications 1 à 5, **caractérisé en ce qu'**une pente moyenne de la force de ressort de capteur (F_{SF}) sur le chemin de désembrayage (s) est supérieure ou égale à cinq pour cent.
